# EUROPÄISCHE PATENTSCHRIFT

(11) **EP 0 417 464 B1**
(45) Veröffentlichungstag und Bekanntmachung des Hinweises auf die Patenterteilung: **22.05.1996**
(21) Anmeldenummer: 90115047.4
(22) Anmeldetag: 06.08.1990
(51) Int. Cl.: H01M 8/10

(54) **Wasserstoff/Sauerstoff-Brennstoffzelle**
Hydrogen/oxygen fuel cell
Pile à combustible du type hydrogène/oxygène

(30) Priorität: 07.09.1989 DE 3929730
(43) Veröffentlichungstag der Anmeldung: 20.03.1991
(73) Patentinhaber: Forschungszentrum Karlsruhe GmbH, D-76133 Karlsruhe (DE); Schott Glaswerke, D-55122 Mainz (DE)
(72) Erfinder: Baucke, Friedrich G.K., Dr., D-6500 Mainz (DE); Dorner, Stefan, Dr., D-7530 Pforzheim (DE); Heinzel, Volker, Dr., D-7515 Linkenheim-Hochstetten (DE); Röth, Gernot, D-6501 Dalheim b. Mainz (DE)
(74) Vertreter: Gottlob, Peter, Dipl. Ing.

(56) Entgegenhaltungen:
- DE-A- 3 403 608
- DE-A- 3 812 813
- DE-C- 3 008 768
- US-A- 4 629 537

## Beschreibung

Die Erfindung betrifft eine Wasserstoff/Sauerstoff-Brennstoffzelle mit einem protonenleitenden Festelektrolyten nach dem Oberbegriff von Anspruch 1.

Solche Wasserstoff/Sauerstoff-Brennstoffzellen sind aus der Veröffentlichung "Assessment of Research Needs for Advanced Fuel Cells" in ENERGY, The International Journal, Volume 11, Number 1/2, Januar/Februar 1986, Seiten 137 bis 152 (Special Issue) bekannt.

Aus dieser Veröffentlichung geht hervor, daß als protonenleitende Festelektrolyten organische Polytetrafluorethylene, z. B. das Produkt Nafion^{R} verwendet werden. Nachteilig an diesem Festelektrolyten ist die aus Materialgründen notwendige Begrenzung der Verfahrenstemperatur auf Werte unter 100° C. Die Verfahrenstemperatur kann selbst dann nur knapp über 100° C erhöht werden, wenn die Brennstoffgase unter erhöhtem Druck (7 bar) zugeführt werden.

Der Festelektrolyt soll zwar eine kurzzeitige Temperaturerhöhung auf 200° C überstehen, jedoch besteht bei diesen Temperaturen prinzipiell die Gefahr einer irreversiblen Veränderung des Materials.

Für künftige Brennstoffzellen werden die anorganischen Heteropolysäuren von Molybdän und Wolfram als Festelektrolyte vorgeschlagen.

Die Heteropolysäuren besitzen jedoch definierte Kristallwassergehalte. Bei höherer Temperatur kann das Kristallwasser leicht entweichen, wodurch sich die physikalischen Eigenschaften ändern. Ein solcher Festelektrolyt erfordert eine gleichmäßige Befeuchtung, da sonst ungleichmäßige Strombelastungen und Temperaturen auftreten, die zu Rissen und sogenannten "hot spots" führen. Unter "hot spots" versteht man diejenigen Stellen eines Elektrolyts, an denen die Reaktionsgase direkten Zugang zueinander haben und ausschließlich unter Wärmeentwicklung miteinander chemisch reagieren.

Als Elektrodenmaterialien sind dieser Veröffentlichung zufolge gesintertes Nickel sowie Legierungen der Edelmetalle Platin und Palladium im Einsatz.

Als Brennstoffgase kommen neben reinem Sauerstoff und Wasserstoff auch Luft und Formiergas in Betracht.

Aus den Veröffentlichungen dtv-Lexikon der Physik, Deutscher Taschenbuchverlag (1970) Band 1, Stichwort "Brennstoffzelle und Rudolf Weber, "Der sauberste Brennstoff", Olynthus Verlag für verständliche Wissenschaft und Technik, Oberbözberg, Schweiz (1988), Seite 74, geht hervor, daß für Brennstoffzellen poröse Elektroden mit offenen Poren von etwa 1 µm Durchmesser verwendet werden müssen.

Diese Poren können sich leicht mit dem bei der Umsetzung der Brennstoffgase entstehenden Wasser füllen, weswegen sie entsprechend der erstgenannten Veröffentlichung mit einer hydrophoben Schicht, i. a. mit einer Polytetrafluorethylenschicht, überzogen werden.

Poröse Elektroden sind auch deshalb weniger vorteihaft, weil die Trennung der wasserstoffhaltigen und sauerstoffhaltigen Gase voneinander gefährdet sein kann, wenn der Elektrolyt seine Trennwirkung, z. B. durch Rißbildung, verliert.

Ein prinzipielles Problem bei den aus diesen Dokumenten bekannten Brennstoffzellen mit Betriebstemperaturen um 100° C besteht darin, daß zwar bei diesen vergleichsweise niedrigen Temperaturen aus thermodynamischen Gründen eine verhältnismäßig hohe Spannung erzielt wird, daß jedoch die Stromstärke der Brennstoffzellen begrenzt ist. Die Stromstärke hängt von der Wasserstoffpermeation ab. Die Wasserstoffpermeation wird umso höher, je höher die Betriebstemperatur ist.

Ferner soll die Betriebstemperatur über dem Siedepunkt des Wassers bei dem jeweiligen Betriebsdruck liegen, damit Wasser auf der Sauerstoffseite verdampft und sich nicht auf der Sauerstoffelektrode als dünner Film niederschlägt. Ein solcher Film würde die Leistung einer Brennstoffzelle drastisch absenken.

Betriebsdrücke oberhalb des Atmosphärendrucks sind jedoch wegen des erzielbaren höheren Umsatzes vorzuziehen. Deshalb sollen sich Brennstoffzellen bei entsprechend hohen Temperaturen betreiben lassen.

Brennstoffzellen für hohe Betriebstemperaturen sind bereits vorgeschlagen worden.

Aus der WO 88/04108 ist eine Brennstoffzelle mit einem Festelektrolyten aus einem Metallfluorid, z. B. vom Typ LaF₃ bekannt, die bei Temperaturen bis 1000 °C betrieben werden kann. Der Festelektrolyt ist in Form eines Kammes strukturiert. Die Brennstoffzelle beruht auf dem Prinzip der Sauerstoffionenleitung. Die Verbrennungsreaktion zwischen den zugeführten Gasen findet deshalb an der H₂-Elektrode statt.

Aus der DE 34 03 608 A1 ist eine weitere Hochtemperaturbrennstoffzelle mit einem Festelektrolyten bekannt. Der Festelektrolyt besteht aus einem oxidstabilisierten und ionisch leitend gemachten HfO₂- oder ZrO₂-Keramikmaterial und ist sandwichartig zwischen porösen Elektroden angeordnet.

Besonders geeignete Materialien für den protonenleitenden Festelektrolyten sind solche Stoffe, die den Betrieb der Brennstoffzelle bei optimierten thermodynamischen Bedingungen, somit bei thermodynamisch optimal aufeinander abgestimmten Parametern zulassen.

Die wesentlichen Parameter, die dabei aufeinander abgestimmt werden müssen, sind die Wasserstoffpermeation, die Betriebstemperatur und der Betriebsdruck. Andererseits soll die Gefahr einer Bildung von "hots spots" dabei möglichst weitgehend eliminiert werden.

Der Erfindung liegt die Aufgabe zugrunde, die Nachteile der Wasserstoff/Sauerstoff-Brennstoffzellen mit protonenleitendem Festelektrolyt der eingangs genannten Art zu beseitigen. Insbesondere sollen Brennstoffzellen angegeben werden, bei denen der Ladungstransport auf einer Protonenleitung beruht und die auch bei Betriebstemperaturen deutlich über 100° C einsetzbar sind. Die Brennstoffzellen sollen gegen hohe Temperaturen weitgehend beständig sein. Eine hohe Stapeldichte von Brennstoffzellen mit hoher spezifischer Leistungsdichte soll ermöglicht werden. Deshalb sollen die einzelnen Brennstoffzellen möglichst dünn sein.

Die Aufgabe wird durch die kennzeichnenden Merkmale des ersten Patentanspruchs gelöst. Die Unteransprüche geben vorteilhafte Ausgestaltungen der Erfindung an.

Erfindungsgemäß werden für den protonenleitenden Festelektrolyten Oxide der IV., V., VI., VIII-Nebengruppe des periodischen Systems oder von Silicium oder Fluoride der II. Hauptgruppe oder der III. Nebengruppe des periodischen Systems vorgeschlagen, wobei auch Mischoxide oder Mischfluoride eingesetzt werden können.

Durch die Verwendung dieser Oxide oder Fluoride sind wesentlich höhere Betriebstemperaturen als mit organischen Protonenleitern möglich. Ferner sind diese Stoffe gegen hohe Temperaturen weitgehend beständig.

Prinzipiell ist die Fähigkeit dieser Oxide und Fluoride, Protonen zu leiten, aus der DE-PS 30 08 768 bekannt. Der Gegenstand dieser Patentschrift liegt jedoch auf einem völlig anderen technischen Gebiet; die genannten Oxide und Fluoride werden zur Herstellung eines elektrochromen Spiegels, z. B. zur Verwendung als blendfreier Rückspiegel in Kraftfahrzeugen, vorgeschlagen.

Der Festelektrolyt hat in der Brennstoffzelle dieselbe Aufgabe wie die elektrochrome Schicht in solchen Spiegeln zu erfüllen, nämlich die Protonen von der H₂-Elektrode zur O₂-Elektrode zu leiten und für die Elektronen als Isolator zu wirken. Um diese Funktion zu erfüllen, kann der protonenleitende Elektrolyt auch bei der Brennstoffzelle sehr dünn gehalten werden.

Protonenleitende Festelektrolyten, die bei höheren Betriebstemperaturen schmelzflüssig werden, können mittels einer dünnen, beständigen und porösen Keramikmatrix festgehalten werden. Die Keramikmatrix soll den Elektrolyten in ihren offenen, durchgehenden Poren fixieren. Die Matrix kann aus Glas oder einem Oxid, wie z. B. Al₂O₃, MgO etc. bestehen.

Als Elektrodenmaterial sind die bekannten Materialien wie z. B. Palladium oder Platin oder deren Legierungen verwendbar.

Diese Elektrodenmaterialien katalysieren die an ihnen ablaufenden Reaktionen ausreichend. Bei anderen Elektrodenmaterialien kann es erforderlich sein, die katalytische Wirkung zu erhöhen. Dies kann z. B. durch Beschichtung der Elektroden mit geeigneten Materialien erfolgen.

Vorteilhafterweise werden als Elektroden dünne, porenfreie Folien verwendet. Solche Folien können beispielsweise durch Bedampfung hergestellt werden.

Für technisch einsetzbare Brennstoffzeilen sollen die Elektroden eine Stärke von 10 bis 15 µm aufweisen, wenn die Wasserstoffdurchlässigkeit des verwendeten Materials bei etwa 10³ (cm³H₂/cm s) pro mm Werkstoffstärke liegt.

Durch noch dünnere Folien läßt sich die Wasserstoffdurchlässigkeit und damit die Flächenleistung noch wesentlich erhöhen. Laborversuche haben die Herstellbarkeit solcher Folien bestätigt.

Einige Metalle und Legierungen von Metallen der III., IV. und V. Nebengruppe des periodischen Systems weisen diese H₂-Durchlässigkeit bereits bei relativ niedrigen Temperaturen auf. Besonders günstig sind in dieser Hinsicht die Metalle Titan und Vanadin und deren Legierungen.

Da die erfindungsgemäße Brennstoffzelle wegen der Wahl anorganischer Oxide oder Fluoride als Festelektrolyt bei höheren Temperaturen betrieben werden kann, erreichen auch die übrigen Metalle bzw. Legierungen eine ausreichend hohe H₂-Durchlässigkeit bei entsprechenden Betriebstemperaturen.

Die teuren Edelmetalle Platin und Palladium können dann durch billigere Metalle ersetzt werden.

Auf poröse Elektroden mit einem sorgfältig eingestellten Porenspektrum kann verzichtet werden, weil die erfindungsgemäßen Festelektrolytmaterialien höhere Betriebstemperaturen zulassen, so daß auch mit porenfreien Folienelektroden eine ausreichende Wasserstoffdurchlässigkeit erzielt werden kann.

Ein weiterer Vorteil von porenfreien Elektroden ist in der besseren Trennung des wasserstoffhaltigen vom sauerstoffhaltigen Gasraum zu sehen.

Manche Metalle, wie z. B. Titan und Niob weisen bereits bei niedrigen Temperaturen eine hohe Wasserstofflöslichkeit auf (Ti : 5 · 10⁴ cm³/100 g). Dennoch ist die Aufnahme von Wasserstoff bei Temperaturen unterhalb 350° C erschwert. Hier hilft eine Bedampfung der unmittelbar zuvor gereinigten Metalle im Ultrahochvakuum mit Palladium oder Nickel. Auf diese Weise beschichtete Elektroden sind auch deshalb vorteilhaft, weil Palladium und Nickel den Wasserstoff auch bei niedrigen Temperaturen leicht absorbieren und gleichzeitig als Katalysatoren bei der Aufspaltung des molekularen Wasserstoffs in atomaren mitwirken.

Da die Metalle der III., IV. und V. Nebengruppe des periodischen Systems eine große Affinität zu Sauerstoff aufweisen, werden sie bevorzugt als H₂-Elektrodenmaterial verwendet.

Auf der Sauerstoffseite ist es erforderlich, ein wasserstoffdurchlässiges Material einzusetzen, welches eine positivere Bildungsenthalpie zum Wasserstoff aufweist als sein Oxid, d. h., der Wasserstoff muß das Oxid des O₂-Elektrodenmaterials reduzieren, damit die O₂-Elektrode vom Sauerstoff nicht oxidiert wird.

Das Material muß deshalb wasserstoffdurchlässig sein, weil die Verbrennungsreaktion an der Oberfläche der O₂-Elektrode stattfindet.

Bei Verwendung der Metalle der III., IV. oder V. Nebengruppe des periodischen Systems als O₂-Elektrode soll zumindest eine Schutzschicht auf der Gasseite aufgebracht werden. Die Anforderungen an eine solche Schutzschicht können durch die Materialien Palladium und Nickel erfüllt werden.

Nickel besitzt zwar eine niedrigere Wasserstoffdurchlässigkeit als Palladium, jedoch lassen sich Nickelfolien technisch preiswert herstellen. Außerdem wird die Anforderung an die Porenfreiheit weniger drastisch, wenn der Feststoffprotonenleiter als sichere Barriere für den Sauerstoff auf der H₂-Elektrode aufgebracht ist.

Die gleichen Maßnahmen müssen getroffen werden, wenn als wasserstoffhaltiges Gas ein Gas verwendet wird, das geringe Mengen an Sauerstoff enthält.

Weiterhin erweist sich eine poröse Beschichtung der O₂-Elektrodenoberfläche zum Gasraum hin mit Silber oder einer Silberlegierung als vorteilhaft, da Silber sauerstoffabsorbierend wirkt.

Beim Aufbau der Brennstoffzellen-Batterie aus den Einzelelektroden kann man sowohl die Filterpreßtechnik wie die modifizierte Vergußtechnik anwenden. Die zu verwendenden Materialien werden den Betriebsbedingungen angepaßt. So können die Elektroden durch isolierende, hochtemperaturbeständige Metall-Keramik-Verbindungen - mit dem Elektrolyt dazwischen - zusammengehalten werden. Die dünnen Schichten der Elektroden wie des Elektrolyten lassen sich außer mittels mechanischer Verformungsverfahren auch galvanisch und elektrophoretisch erzeugen. Für Laborversuchszwecke wurden die Elektroden und Elektrolytschichten durch Aufdampfen erzeugt, wozu verschiedene Verfahren in Frage kommen. Die benutzten Schichten mit 0,4 µm erwiesen sich als porenfrei.

Die Folienelektroden-Brennstoffzelle mit festen Protonenleiter-Elektrolyten bietet außerdem den Vorteil, daß es möglich ist, durch Änderung der Betriebstemperatur und des Wasserstoff-Gasdrucks im Gasraum die Leistung der Brennstoffzelle zu variieren. Die Erhöhung des H₂-Gasdrucks im Gasraum erhöht auch die H₂-Permeation durch die Elektroden und damit erfolgt auch die Leistungserhöhung. Das gleiche bewirkt auch die Temperaturerhöhung. Diese Parameter - Temperatur und Druck - können zugleich oder einzeln variiert werden.

Die Brennstoffzelle muß zum Anfahren auf die Betriebstemperatur gebracht werden. Dies kann beispielsweise durch eine elektrische Heizung erfolgen. Auf die hierfür notwendige Stromversorgung kann jedoch verzichtet werden, wenn die Brennstoffzelle durch direkte Verbrennung des Wasserstoffs aufgeheizt wird.

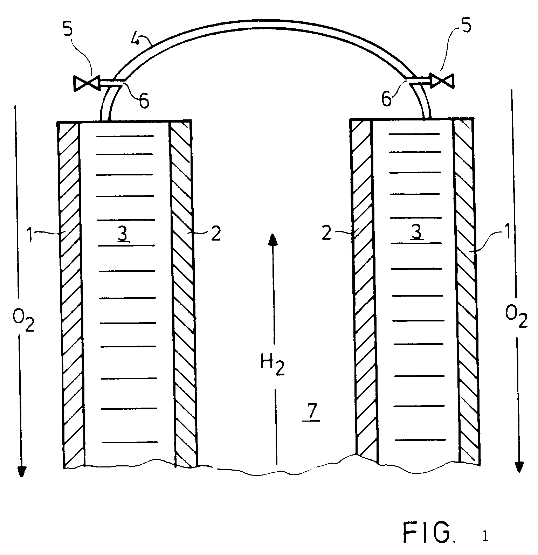

Figur 1 zeigt schematisch zwei Brennstoffzellen mit den O₂-Elektroden 1, den H₂-Elektroden 2 und den Festelektrolyten 3. Die Katalysatorbeschichtung der O₂- und H₂-Elektroden ist nicht dargestellt.

Fig. 2 zeigt eine spezielle Ausführungsform der Erfindung.

Der wasserstoffhaltige Gasstrom strömt in den an einem Ende durch eine Vorrichtung 4 verschlossenen Gasraum 7, wobei Wasserstoff in Form von Protonen durch die Brennstoffzellen zum sauerstoffhaltigen Gasraum wandert.

Die Vorrichtung 4 kann eine oder mehrere Öffnungen aufweisen, die z. B. mit einem Nadelventil 5 verschließbar sind und über die der wasserstoffhaltige mit dem sauerstoffhaltigen Gasraum verbunden ist. Wenn der wasserstoffhaltige Gasstrom unter Druck zugeführt wird, gelangt er über die öffnung 6 zum sauerstoffhaltigen Gasraum und entzündet sich beim Kontakt mit der Katalysatorschicht der O₂-Elektrode.

Hierdurch kann die Vorrichtung auf Betriebstemperatur aufgeheizt werden. Ein weiterer Vorteil ist, daß sich im Raum 7 akummulierende Verunreinigungen beseitigt ggf. verbrannt und mit dem sauerstoffhaltigen Gasstrom entfernt werden.

### Beispiel

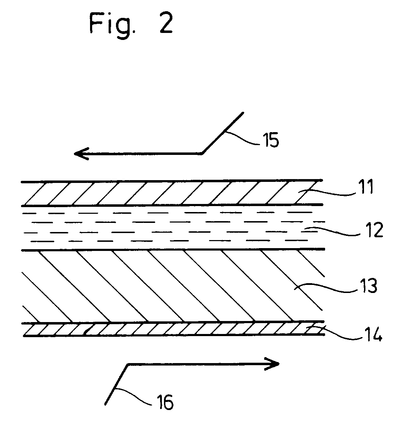

Fig. 2 zeigt eine erfindungsgemäße Brennstoffzelle.

Als Gasströme 15, 16 wurden auf der Sauerstoffseite 15 20 % O₂ in 80 % N₂ und auf der Wasserstoffseite 16 20 % H₂ in 80 % N₂ verwendet.

Der Druck betrug jeweils 1 bar (abs).

Die Sauerstoffelektrode 11 bestand aus einer 0,5 µm dicken Schicht aus Nickel. Daran schloß sich eine 0,5 µm dicke Schicht von Ta₂O₅ als Festelektrolyt 12 an. Die Wasserstoffelektrode wurde aus einer 12,5 µm dicken Nickelschicht 13 gebildet, die von einer einige Atomlagen dicken Schicht 14 aus Palladium auf der Gasseite abgedeckt war.

Der Durchmesser der Brennstoffzelle betrug 80 mm.

Diese Zelle lieferte bei folgenden Spannungen:

| | |
|---|---|
| 70° C : | 0,97 V |
| 120° C : | 0,88 V |
| 140° C : | 0,81 V |

## Patentansprüche

1. Wasserstoff/Sauerstoff-Brennstoffzelle mit einem protonenleitenden, bei Raumtemperatur festen Elektrolyten, auf dem gegenüberliegend
- eine sich negativ aufladende wasserstoffdurchlässige Elektrode, die mit einem wasserstoffhaltigen Gasraum in Verbindung steht (H₂-Elektrode),
- eine sich positiv aufladende wasserstoffdurchlässige Elektrode, die mit einem sauerstoffhaltigen Gasraum in Verbindung steht (O₂-Elektrode),
angebracht sind,
wobei die Verbrennungsreaktion zwischen den in den beiden Gasräumen enthaltenen Gasen an der Oberfläche der O₂-Elektrode stattfindet,
dadurch gekennzeichnet, daß
- der protonenleitende Festelektrolyt aus einem oder mehreren Oxiden der IV., V., VI. oder VIII. Nebengruppe des periodischen Systems oder aus Siliciumdioxid oder aus einem oder mehreren Fluoriden der II. Haupt- oder III. Nebengruppe des periodischen Systems besteht und
- als Elektroden porenfreie Folien aus einem für Wasserstoff durchlässigen Metall oder einer für Wasserstoff durchlässigen Metallegierung vorgesehen sind, die den Festelektrolyten schichtförmig abdecken.

2. Brennstoffzelle nach Anspruch 1, dadurch gekennzeichnet, daß die Elektroden aus mindestens einem Metall der III., IV. oder V. Nebengruppe bestehen.

3. Brennstoffzelle nach Anspruch 2, dadurch gekennzeichnet, daß die Elektroden auf ihrer Gasseite mit einem wasserstoffdurchlässigen Material beschichtet sind.

4. Brennstoffzelle nach Anspruch 3, dadurch gekennzeichnet, daß die Beschichtung aus Nickel oder Palladium besteht.

5. Brennstoffzelle nach einem der Ansprüche 1 bis 4, dadurch gekennzeichnet, daß die O₂-Elektrode mit einer porösen äußeren Schicht aus Silber versehen ist.

6. Brennstoffzelle nach einem der Ansprüche 1 bis 5, dadurch gekennzeichnet, daß durch mindestens eine verschließbare Öffnung die wasserstoffhaltigen und sauerstoffhaltigen Gasräume überbrückt sind.

## Claims

1. Hydrogen/oxygen fuel cell, having a proton-conducting electrolyte which is fixed at ambient temperature and has mounted thereon, lying opposite each other,
- a negatively charging hydrogen-permeable electrode which communicates with a hydrogen-containing gas chamber (H₂ electrode),
- a positively charging hydrogen-permeable electrode which communicates with an oxygen-containing gas chamber (O₂ electrode),
the combustion reaction between the gases contained in the two gas chambers occurring on the surface of the O₂ electrode,
characterised in that
- the proton-conducting fixed electrolyte is formed from one or more oxides of the IVth, Vth, VIth or VIIIth subsidiary group of the periodic system or from silicon dioxide or from one of more fluorides of the IInd main group or IIIrd subsidiary group of the periodic system, and
- pore-free foils formed from a hydrogen-permeable metal or a hydrogen-permeable metal alloy are provided as electrodes which cover the fixed electrolyte in layers.

2. Fuel cell according to claim 1, characterised in that the electrodes are formed from at least one metal of the IIIrd, IVth or Vth subsidiary group.

3. Fuel cell according to claim 2, characterised in that the electrodes are coated on their gas side with a hydrogen-permeable material.

4. Fuel cell according to claim 3, characterised in that the coating is formed from nickel or palladium.

5. Fuel cell according to one of claims 1 to 4, characterised in that the O₂ electrode is provided with a porous outer layer of silver.

6. Fuel cell according to one of claims 1 to 5, characterised in that the hydrogen-containing and oxygen-containing gas chambers are spanned by at least one sealable opening.

## Revendications

1. Pile à combustible du type hydrogène/oxygène avec un électrolyte solide à température ambiante conducteur de protons, sur lequel on dispose face à face :
- une électrode se chargeant négativement perméable à l'hydrogène, qui est au contact d'une chambre à gaz contenant de l'hydrogène (électrode H₂),
- une électrode se chargeant positivement perméable à l'hydrogène, qui est au contact d'une chambre à gaz contenant de l'oxygène (électrode O₂), où la réaction de combustion a lieu à la surface de l'électrode O₂ entre les gaz contenus dans les deux chambres à gaz,
caractérisée en ce que :
- l'électrolyte solide conducteur de protons est constitué d'un ou plusieurs oxydes des sous-groupes IV, V, VI ou VIII du tableau périodique ou de dioxyde de silicium ou d'un ou plusieurs fluorures du groupe II principal ou du sous-groupe III du tableau périodique et,
- on prévoit comme électrodes des films sans pores d'un métal perméable à l'hydrogène ou d'un alliage de métal perméable à l'hydrogène, qui recouvrent les électrolytes solides sous forme de couches.

2. Piles à combustible selon la revendication 1, caractérisée en ce que les électrodes sont constituées d'au moins un métal du sous-groupe III, IV ou V.

3. Pile à combustible selon la revendication 2, caractérisé en ce que les électrodes sont recouvertes du côté gaz d'un matériau perméable à l'hydrogène.

4. Pile à combustible selon la revendication 3, caractérisée en ce que le revêtement est en nickel ou palladium.

5. Pile à combustible selon l'une des revendications 1 à 4, caractérisée en ce que l'électrode O₂ est recouverte d'une couche externe poreuse en argent.

6. Pile à combustible selon l'une des revendications 1 à 5, caractérisée en ce que les chambres à gaz contenant de l'hydrogène et contenant de l'oxygène sont reliées par un orifice obturable.
